# EUROPEAN PATENT SPECIFICATION

(11) **EP 0 897 404 B1**
(45) Date of publication and mention of the grant of the patent: **17.10.2001**
(21) Application number: 97926617.8
(22) Date of filing: 08.05.1997
(51) Int. Cl.: C08G 18/28, C08G 18/62

(54) **METHOD OF MANUFACTURING COMPOSITE AQUEOUS DISPERSION AND AQUEOUS DISPERSION CAPABLE OF FORMING COMPOSITE FILM**
VERFAHREN ZUR HERSTELLUNG VON WÄSSRIGEN VERBUNDDISPERSIONEN UND WÄSSRIGE DISPERSION ZUR HERSTELLUNG EINER VERBUNDFOLIE
PROCEDE DE PREPARATION D'UNE DISPERSION AQUEUSE COMPOSITE ET DISPERSION AQUEUSE SUSCEPTIBLE DE FORMER UN FILM COMPOSITE

(30) Priority: 10.05.1996 JP 11585296
(43) Date of publication of application: 24.02.1999
(73) Proprietor: National Starch and Chemical Investment Holding Corporation, Wilmington, Delaware 19809 (US)
(72) Inventor: ASAOKA, Seiji, Suita-City, Osaka 565 (JP)
(74) Representative: Held, Stephan, Dr.rer.nat., Dipl.-Chem.
(86) International application number: US9708540
(87) International publication number: WO9743327

(56) References cited:
- EP-A- 0 163 214
- EP-A- 0 480 363
- EP-A- 0 485 067
- WO-A-95/21206
- DE-A- 19 506 978
- US-A- 3 983 291
- US-A- 4 628 076

## Description

The present invention relates to aqueous resin which may be used in aqueous coating agent, adhesive, paint base, (binder) resin or modifier thereof and relates also to a method of manufacturing the resin.

Polyurethane resin is a resin having superior adherence property with respect to various substrates and abrasion resistance. Also, polyurethane resin, when employed in paint, adds thickness or mass and quality touch to the paint. For these reasons, polyurethane resin has been widely used as base in construction paint material, paint for wood material, paint for automobiles and motorcycles. In recent years, however, there have been enforced more strict regulations concerning use of solvent in view of the environmental influence thereof, and there has been a need for switching over the solvent-based polyurethane resin to water-based or aqueous polyurethane resin.

On the other hand, while polyurethane resin has the superior properties as mentioned above, the resin still has room for improvement in other properties including weatherability, hydrolysis resistance, and heat resistance. In order to improve these properties, in the case of the solvent-based type resin, there has been an attempt to copolymerize this resin with acrylic resin, for example.

However, in the case of aqueous polyurethane resin, composition such as the copolymerization between polyurethane and, e.g., acrylic polymer is not easy, unlike the case of the solvent-based resin. In this respect, the convention has made various proposals as follow, yet, these respectively suffer the following problems.
(1) Method of blending aqueous polyurethane resin with other aqueous resin, such as acrylic resin emulsion.
   This method is the simplest of all; yet, since the polyurethane resin and the other resin are not copolymerized, the method can only provide limited modifying effect. Further, in most cases, the compatibility between the polyurethane resin and the other resin is low, so that the method cannot provide uniform and transparent film.
(2) Method of emulsifying and polymerizing acrylic monomers, with using, as an emulsifier, aqueous polyurethane resin containing hydrolytic silicon (Japanese published patent gazette Hei. 6-510559).
   This method requires that the polyurethane resin employed have high hydrophilic property. Hence, the properties of the polyurethane resin are limited and also covalent bond can hardly be formed between the polyurethane resin and the acrylic resin. So that, like the method (1), this method too cannot achieve satisfactory modifying effect.
(3) Method of blending aqueous polyurethane resin including hydrolytic silicon and acrylic emulsion resin including hydrolytic silicon (Japanese laid-open patent gazette Hei. 6-16894).

In the case of this method, if the particle size of the dispersed resin is reduced, there occurs reaction between silyl groups in the water, which causes a problem in storage stability. Conversely, if the particle size is increased, the storage stability is improved. However, there occur new problems of unevenness in the film and film forming failure. Accordingly, in this method, the permissible range of the material used is significantly restricted, and the resultant material too has many restrictions in its properties.

An object of the present invention is to provide a method of manufacturing composite aqueous dispersion and aqueous dispersion capable of forming composite film, which are capable of solving the above-mentioned drawbacks of the convention which arise particularly when aqueous polyurethane resin is to be modified by aqueous resin polymer of ethylenic unsaturated monomer, namely, the poor modifying effect, un-uniformity of the film formed and troublesomeness of manufacturing the aqueous dispersion resin attributable to, e.g., the low compatibility and non-abundance of the covalent bond as described above.

According to the present invention, there is provided a method of manufacturing composite aqueous dispersion, which comprises the step of dispersing polyurethane prepolymer including hydrolyzable silicon in the molecule thereof within aqueous resin polymer of ethylenic unsaturated monomer dispersion including hydrolyzable silicon in the molecule thereof.

With the above method, it is possible to achieve distinguished modifying effect. Although the exact function is unknown, it is believed that the polyurethane prepolymer before being formed into particles in the water becomes chemically bonded, in the molecular level, with the other aqueous resin through bonding of the former to the surface of particle of the latter or merging of the former into the particle of the latter.

In the polyurethane prepolymer employed by the present invention, it is preferred that the molecule thereof per se has hydrophilic group.

With the polyurethane prepolymer having hydrophilic property, it becomes easier to disperse this prepolymer within the other aqueous resin, whereby composite aqueous dispersion having high stability may be obtained.

The polyurethane prepolymer including hydrolyzable silicon in the molecule thereof and the aqueous resin polymer of ethylenic unsaturated monomer dispersion including hydrolyzable silicon in the molecule thereof are used in a solid weight ratio ranging in 0.5-99.5/99.5-0.5.

If the mixing ratio of the polyurethane prepolymer is lower than 0.5, the polyurethane cannot achieve its advantageous properties fully. Conversely, if the ratio is higher than 99.5, the resin of ethylenic unsaturated monomer cannot sufficiently provide its modifying effect, whereby the disadvantageous properties of polyurethane become conspicuous.

Preferably, the aqueous resin polymer of ethylenic unsaturated monomer dispersion is added with surfactant, before the polyurethane prepolymer is dispersed therewithin.

Many of resin of ethylenic unsaturated monomer emulsions are emulsified and polymerized without using surfactant. Then, with the above, if the polyurethane prepolymer employed has high hydrophobic property, it is still possible to obtain composite aqueous dispersion having high stability.

According to a further aspect of the present invention, there is provided composite aqueous dispersion, which is obtained by dispersing polyurethane prepolymer including hydrolyzable silicon in the molecule thereof within aqueous resin polymer of ethylenic unsaturated monomer dispersion including hydrolyzable silicon in the molecule thereof.

Alternatively, by employing polyurethane prepolymer including isocyanate group and copolymerizing monomer including hydroxyl group with the resin of ethylenic unsaturated monomer in advance, it is also possible to form copolymerization between the polyurethane and the resin of ethylenic unsaturated monomer. Then, this method may be employed in the present invention. However, further distinguished modifying effect may be advantageously achieved by the method of the present invention described above, in which both the polyurethane prepolymer and the resin of ethylenic unsaturated monomer include hydrolyzable silicon in the respective molecule thereof, and siloxane bond is formed between these hydrolyzable silicons after preparation of the composite aqueous dispersion or in the course of formation of film.

For embodying the present invention, there is employed a process including the steps of: synthesis of polyurethane prepolymer, synthesis of resin of ethylenic unsaturated monomer emulsion, and dispersion of the polyurethane prepolymer within the resin of ethylenic unsaturated monomer emulsion.

The synthesis of polyurethane prepolymer may be effected conventionally, e.g., by using polyisocyanate compound, polyols, and also chain extender, organic solvent or the like when necessary or appropriate.

Examples of polyisocyanate compound are: aliphatic diisocyante such as ethylene diisocyanate, 2,2,4-trimethylhexaethylene diisocyanate, 1,6-hexamethylene diisocyanate; alicyclic diisocyanate such as hydrogenated 4,4'-diphenylmethane diisocyanate, hydrogenated methylene disocyanate (HMDI), 1,4-cyclohexane diisocyanate, bis (isocyanate methyl) cyclohexane, isophorone diisocyanate; and aromatic diisocyanate such as 4,4'-diphenylmethane diisocyanate, xylylene diisocyanate, toluene diisocyanate. For applications in which aging discoloration is to be considered, it is preferred that either the aliphatic diisocyanate or the alicyclic diisocyanate be used singly or these be used in combination. If cost also is to be considered, 1,6-hexamethylene diisocyanate and isophorone diisocyanate are particularly preferred.

Further, the polyol component employed by the method of the invention may be any commonly used in manufacture of polyurethane. Examples of such polyols are: polyester polyol, polyether polyol, polycarbonate polyol, polybutadiene polyol, polyisoprene polyol, polyolefin polyol, and poly (metha) acrylic acid ester polyol. These may be used singly or in combination.

In the present invention, in order to provide the polyurethane prepolymer with the hydrophilic property, anionic group or functional group dissociating into anionic group, cationic group or functional group convertible into cationic group or nonionic group (these will be generically referred to as "hydrophilic group" hereinafter) may be used. And, compound having such functional group is copolymerized in the course of synthesis of the polyurethane prepolymer. As such compound, compound having at least one active hydrogen and hydrophilic group within the molecule thereof is caused to react with the polyisocyanate compound. Examples of compounds having functional group dissociable into anion are: dimethylol propionic acid, dimethylol butanoic acid, polycaprolactonedion containing carboxyl group, and polyesterpolyol containing sulfonate or sulfate, di(β-hydroxylethyl)isophtalic acid-5-sulfonic acid sodium salt. Further, examples of the compound having functional group convertible into cation are those compounds such as N-alkyldiethanol amine, capable of forming quaternary ammonium group through reaction with alkylating agent. Examples of the compound having nonionic hydrophilic group are: polyethyleneglycol, polyethylene-propyleneglycol and so on.

In the present invention, carboxyl group is preferred as the hydrophilic group. The compound having carboxyl group is dissociated by basic compound into carboxylic ion. Examples of such basic compound are triethylamine, triethanolamine, ammonia, sodium hydroxide, potassium hydroxide, and so on.

As the hydrolyzable silyl group contained in the compound including at least one active hydrogen and hydrolyzable silicon in the molecule thereof, i.e., hydrolyzable silyl group, alkoxysilyl group is preferred and this may be any of mono-, di-, tri-alkoxysilyl group. Examples of alkoxysilyl group are methoxysilyl group, and ethoxysilyl group. Examples of typical compounds are:
γ-mercaptopropyltrimethoxysilane,
γ-mercaptomethyldimethoxysilane,
γ-mercaptopropyltriethoxysilane,
γ-mercaptopropylmethyldiethoxysilane,
N-β (amino ethyl) γ-aminopropyltrlmethoxysilane,
N-β (amino ethyl) γ-aminopropylmethyldimethoxysilane,
γ-aminopropyltriethoxysilane, and
N-phenyl-γ-aminopropyltrimethoxysilane.

In the present invention, these compounds may be employed singly or in combination of more than two kinds of them.

Examples of the chain extender employed, when necessary, by the present invention are low molecular glycol or triol represented by ethyleneglycol, propyleneglycol, 1,-4-butadiol, and trimethylpropane and polyamine represented by ethylenediamine, propylenediamine, butylenediamine and hexamethylenediamine.

These chain extenders are used for adjusting the physical properties of polyurethane.

The polyurethane prepolymer having hydrolytic silyl group is obtained by reacting the polyol, together with the chain extender when necessary, with NCO-excess stoichiometry between isocyanate group (NCO) and hydroxyl group (OH) to obtain NCO prepolymer and subsequently reacting the NCO prepolymer with the compound including at least one active hydrogen and hydrolytic silyl group in the molecule thereof.

In the synthesis of the polyurethane prepolymer, catalyst such as organometalic compound, tertiary amine or the like commonly employed in the polyurethane synthesis reaction may be employed.

As the ethylenic unsaturated monomer for preparing the ehtylenic unsaturated monomer emulsion employed in the present invention, acrylic alkyester, specifically, methylacrylate, ethylacrylate, hydroxyethylacrylate, hydroxypropylacrylate, n-butylacrylate, 2-ethylhexylacrylate, isobutylacrylate, trimethylolpropanetriacrylate and monomers having these added with a functional group. Examples of methacrylic ester are methacrylic-acid alkyl ester, more particularly, methylmethacrylate, ethylmethacrylate, n-butylmethacrylate, isobutylmethacrylate, laurylmethacrylate, trimethyrolpropanetrimethacrylate, glycidylmethacrylate, methoxydiethylenemethacrylate, methoxypolyethylene-glycolmethacrylate, allylmethacrylate, and monomers having these added with a functional group.

Together with the monomers, (metha)acrylic ester having an active hydrogen group may be employed. For instance, β-hydroxyethylacrylate, β-hydroxymethylmethacrylate, hydroxypropylacrylate, hydroxypropylmethacrylate, N-methyol (metha) acrylamide may be used. When such (metha) acrylic acid ester having an active hydrogen group is employed, the resin forming ethylenic unsaturated monomer emulsion and the prepolymer may be reacted and bonded in the molecular level through reaction between isocyanate group and this active hydrogen as well.

Other useful copolymerizable comonomers include vinyl acetate as well as high alkyl (C2-C10) vinyl esters such as vinyl propionate, vinyl pivalate, C9 or C10 vinyl versitate, vinyl -2-ethyl hexanoate, ethylene; styrene, and butadiene.

Copolymers of the above described monomers may also be used. The latter are represented by ethylene vinyl acetate, butyl acrylate/styrene, butyl acrylate/methylmethacrylate, ethyl acrylate/methmethacrylate, ethylene/vinyl acetate/vv10, vinyl pivalate/butyl acrylate and styrene/butadiene.

Further, monomers and copolymers containing various functionality may also be employed. These would include, for example, maleic anhydride, mono or dialkyl maleates, diallyl phthalate, acrylamide, N-vinyl formamide, N-vinyl pyrollidone, N-vinyl acrylamide, N-methyl acrylamide, itaconic acid, acrylonitrile, N-vinylacetamide, acrylic acid and methacrylic acid.

These monomers may be emulsified by using the well-known emulsifying polymerizing means or devices.

For dispersing polyurethane prepolymer, especially polyurethane prepolymer having hydrolyzable silyl group within the ethylenic unsaturated monomer emulsion, any method commonly employed for emulsifying polymerization may be employed, with using a device capable of forcible stirring. A homogenizer providing a strong shearing force is particularly preferred.

Preferably, in the above process or prior thereto, surfactant is added to the ethylenic unsaturated monomer emulsion so as to obtain highly stable composite aqueous dispersion. As the surfactant usable for such purpose, nonionic, anionic or cationic surfactants commonly employed for emulsifying polymerization may be used. However, in this process it is necessary that the employed surfactant and the hydrophilic group added to polyurethane not electrically repel each other.

Also, preferably, in the course of synthesis of polyurethane prepolymer or dispersion thereof within ethylenic unsaturated monomer emulsion, organic solvent is added to the polyurethane prepolymer. This can allow broader range in the selection of properties of the polyurethane prepolymer and also facilitate the dispersion within ethylenic unsaturated monomer emulsion. As such organic solvent, any can be used if it has good compatibility with polyurethane prepolymer. However, hydrophilic solvent such as diethyleneglycolmonomethyletheracetate, N-methylpyroolidone, acetone as well as ethyl acetate, butyl acetate, methylethyl ketone, and methyl isobutyl ketone are preferred if toxicity should be considered also.

Further, at any step of manufacturing the dispersion of the invention, it is possible, if necessary, to add various stabilizing agents such as antioxidant, UV absorbent, which are commonly added in the synthesis of urethane resin.

Further, in the process of forming a film from the polyurethane aqueous solution or dispersion of the invention, in necessary, crosslinking agent represented by water-soluble isocyanate, water-soluble epoxy resin, aziridine compound, oxazoline, phenolic, melamine or urea formaldehyde compound may be used in combination.

The composite aqueous dispersion of the invention may be used singly, or may be blended with other aqueous resin, such as acrylic emulsion, ethylene vinyl acetate, vinyl acetate emulsion or the like for modifying these emulsions.

The composite aqueous dispersion of the invention obtained by dispersing polyurethane prepolymer within ethylenic unsaturated monomer emulsion can form composite film through bonding between molecules of polyurethane and resin of ethylenic unsaturated monomer, thus achieving distinguished performance.

In the following examples all parts are by weight and all temperatures in degrees Centigrade unless otherwise noted.

### SYNTHESIS EXAMPLES

(1) Preparation of polyurethane prepolymer
   Into a glass flask attached with a stirring unit, a nitrogen introducing pipe, a reflux condenser and a thermometer, isophorone diisoscyante 100 g, Nipporan N-4073 (Nihon Polyurethane Co., Ltd.) 150 g, dimethylol propionic acid 20 g, and ethyl acetate 60 g were charged, and this was reacted for 5 hours at 80°C, using an oil bath. Then, the mixture was allowed to cool to 60°C, and aminopropyltriethoxysilane 10 g was added thereto and reacted for 30 minutes, whereby polyurethane prepolymer including hydrolyzable silicone in the molecule thereof was obtained.
(2) Synthesis of ethylenic unsaturated polymer aqueous dispersion:
   Into a glass flask attached with a stirring unit, a nitrogen introducing pipe, and a thermometer, ethyl methacrylate 91 g, methacrylilic acid 6 g, silane coupling agent A-174 3 g, n-dodecylmercaptan 2 g, isopropanol 80 g, and AIBN 0.9 g were charged and this mixture was then allowed to react for 5 hours at 80°C. Upon completion of this reaction, isopanol 20 g was added thereto and the system was rendered uniform. Then, this was allowed to cool to 50°C. To this cooled mixture, aqueous ammonia was added to adjust the pH of the mixture liquid to 8. To this liquid, water 300 g was added. Subsequently, under a reduced pressure, isopropanol was collected from the mixture liquid, whereby ethylenic unsaturated polymer aqueous dispersion (II) was obtained.
(3) Preparation of polyurethane aqueous dispersion
   Under high-speed stirring, water 400 g in which triethylamine 12 g had been dissolved was added to the polyurethane prepolymer (I) 340 g, to obtain dispersion. Thereafter, a chain extending reaction was effected for 3 hours, whereby polyurethane aqueous dispersion (III) including hydrolyzable silicone in the molecule thereof was obtained.
(4) Preparation of polyurethane aqueous dispersion/ethylenic unsaturated polymer aqueous dispersion blended liquid:
   To the polyurethane aqueous dispersion (III) 752 g obtained at (3) above, the ethylenic unsaturated polymer aqueous dispersion (II) obtained at (2) was added and mixed uniformly, whereby polyurethane aqueous dispersion/ethylenic unsaturated polymer aqueous dispersion blended liquid (IV) was obtained.
(5) Preparation of composite aqueous dispersion:
   Under high-speed stirring, to the polyurethane prepolymer (1) 340 g obtained at (1) and including hydrolyzable silicon in the molecule thereof, the ethylenic unsaturated polymer aqueous dispersion (II) 300 g obtained at (2), water 200 g, and liquid (512 g) mixed with triethylamine 12 g were added to obtain dispersion. Then, a chain extending reaction was effected for 3 hours, whereby composite aqueous dispersion (V) of the polyurethane/ethylenic unsaturated polymer was obtained. This liquid is a sample dispersion having the above-described characterizing features of the present invention.

### EVALUATION TEST

### [1] Evaluation of properties of dispersion

(1) Storage stability:
Each sample was left for one week within an oven maintained at 50°C, and change in the viscosity of the sample was visually evaluated.
Evaluation results are indicated as follow.

| | |
|---|---|
| Good | no change |
| Poor | increased viscosity-gelation |

(2) Film forming performance:
Each sample was applied in the thickness of 50 µm on a glass plate, and film formation at 20°C was observed.
The evaluation results are indicated as follow.

| | |
|---|---|
| Good | ability of film formation |
| Fair | occurrence of crack in a portion of the film |
| Poor | occurrence of crack in the entire film |

[2] Evaluation of properties of film formed
By using an applicator, a film in the thickness of 50 µm was formed on a glass plate and dried at 25°C, to be used for following evaluations.
(1) appearance:
The appearance of film formed from each sample was visually evaluated.
The evaluation results are indicated as follow.

| | |
|---|---|
| Good | transparent |
| Poor | cloudy |

(2) weatherability:
Film formed from each sample was left for 500 hours in a weather meter (WEL-SUN-HC B type, Suga Testing Machine Co., Ltd.) and change in the film was visually checked.
The evaluation results are indicated as follow.

| | |
|---|---|
| Good | no change |
| Fair | crack developed in the film surface |
| Poor | crack developed in the entire film |

(3) water resistance:
Film formed from each sample was kept submerged in water for 24 hours, and development of cloudiness in the film was visually checked.
The evaluation results are indicated as follow.

| | |
|---|---|
| Good | no development of cloudiness observed |
| Poor | small amount of cloudiness development observed |

(4) solvent resistance:
On film formed from each sample, absorbent cotton impregnated with toluene was placed and condition of the film after lapse of 24 hours was visually checked.
The evaluation results are indicated as follow.

| | |
|---|---|
| Good | no change |
| Fair | swelling of a portion of the surface due to the solvent. |

(5) Friction resistance:
The surface of film formed from each sample was abraded 1000 times by "GAKUSHIN" (method of the Japan Society for Promotion of Scientific Research) type testing machine. Then the condition of the film was visually checked.
The evaluation results are indicated as follow.

| | |
|---|---|
| Good | no change |
| Fair | partially abraded |
| Poor | entirely abraded |

The above results are summarized in Table 1 as below. From these results, it may be understood that the sample (V) best representative of the features of the present invention provided the distinguished results in all the evaluation items above. The superiority of the present invention stands out even more conspicuously in comparison especially with the simple blend type aqueous dispersion (IV).

**Table 1**

| Sample | Dispersion | | Film Properties | | | | |
|---|---|---|---|---|---|---|---|
| | Storage Stability | Film Formation | Appearance | Weather Resistance | Water Resistance | Solvent Resistance | Friction Resistance |
| V | Good | Good | Good | Good | Good | Good | Good |
| II | Good | Poor | Poor | Good | Good | Fair | Poor |
| III | Good | Good | Good | Poor | Good | Good | Good |
| IV | Poor | Fair | Poor | Fair | Fair | Fair | Fair |

## Claims

1. A method of manufacturing a composite aqueous dispersion comprising the step of dispersing a polyurethane prepolymer including hydrolyzable silicon in the molecule thereof within an aqueous resin polymer of ethylenic unsaturated monomer dispersion including hydrolyzable silicon in the molecule thereof, wherein said polyurethane prepolymer including hydrolyzable silicon in the molecule thereof and said aqueous resin polymer of ethylenic unsaturated monomer dispersion including hydrolyzable silicon in the molecule thereof are used in a solid weight ratio ranging in 0.5-99.5/99.5-0.5.

2. The method according to Claim 1, wherein said polyurethane prepolymer further includes hydrophilic group.

3. The method according to Claim 1, wherein said aqueous resin polymer of ethylenic unsaturated monomer dispersion further includes surfactant

4. A composite aqueous dispersion capable of forming composite film, which is obtained by dispersing a polyurethane prepolymer including hydrolyzable silicon in the molecule thereof within an aqueous resin polymer of ethylenic unsaturated monomer dispersion including hydrolyzable silicon in the molecule thereof, wherein said polyurethane prepolymer including hydrolyzable silicon in the molecule thereof and said aqueous resin polymer of ethylenic unsaturated monomer dispersion including hydrolyzable silicon in the molecule thereof are used in a solid weight ratio ranging in 0.5-99.5/99.5-0.5.

## Patentansprüche

1. Verfahren zur Herstellung einer wäßrigen Verbunddispersion, umfassend den Schritt des Dispergierens eines Polyurethanpräpolymers, einschließlich hydrolysierbarem Silicon im Molekül, in einem wäßrigen Harzpolymer aus ethylenisch ungesättigter Monomerdispersion, einschließlich hydrolysierbarem Silicium im Molekül, wobei das Polyurethanpräpolymer, einschließlich hydrolysierbarem Silicium im Molekül, und das wäßrige Harzpolymer aus ethylenisch ungesättigter Monomerdispersion, einschließlich hydrolysierbarem Silicium im Molekül, in einem Feststoffgewichtsverhältnis im Bereich von 0,5-99,5/99,5-0,5 verwendet werden.

2. Verfahren gemäß Anspruch 1, wobei das Polyurethanpräpolymer darüber hinaus (eine) hydrophile Gruppe(n) enthält.

3. Verfahren gemäß Anspruch 1, wobei das wäßrige Harzpolymer aus ethylenisch ungesättigter Monomerdispersion darüber hinaus (ein) Tensid(e) enthält.

4. Wäßrige, zur Bildung eines Verbundfilms fähige Verbunddispersion, die durch Dispersion eines Polyurethanpräpolymers, einschließlich hydrolysierbarem Silicium im Molekül, in einem wäßrigen Harzpolymer aus ethylenisch ungesättigter Monomerdispersion, einschließlich hydrolysierbarem Silicium im Molekül, erhalten ist, wobei das Polyurethanpräpolymer, einschließlich hydrolysierbarem Silicium im Molekül, und das wäßrige Harzpolymer aus ethylenisch ungesättigter Monomerdispersion, einschließlich hydrolysierbarem Silicium im Molekül, in einem Feststoffgewichtsverhältnis im Bereich von 0,5-99,5/99,5-0,5 verwendet werden.

## Revendications

1. Procédé pour la production d'une dispersion aqueuse composite, comprenant l'étape consistant à disperser un prépolymère de polyuréthanne renfermant du silicium hydrolysable dans sa molécule dans une dispersion aqueuse d'une résine polymère d'un monomère à insaturation éthylénique renfermant du silicium hydrolysable dans sa molécule, dans lequel ledit prépolymère de polyuréthanne renfermant du silicium hydrolysable dans sa molécule et ladite dispersion aqueuse de résine polymère d'un monomère à insaturation éthylénique renfermant du silicium hydrolysable dans sa molécule sont utilisés en un rapport pondéral des matières solides compris dans l'intervalle de 0,5-99,5/99,5-0,5.

2. Procédé suivant la revendication 1, dans lequel le prépolymère de polyuréthanne comprend en outre un groupe hydrophile.

3. Procédé suivant la revendication 1, dans lequel la dispersion aqueuse de résine polymère d'un monomère à insaturation éthylénique comprend en outre un agent tensio-actif.

4. Dispersion aqueuse composite capable de former un film composite, qui est obtenue en dispersant un prépolymère de polyuréthanne renfermant du silicium hydrolysable dans sa molécule, dans une dispersion aqueuse d'une résine polymère d'un monomère à insaturation éthylénique renfermant du silicium hydrolysable dans sa molécule, dans laquelle ledit prépolymère de polyuréthanne renfermant du silicium hydrolysable dans sa molécule et ladite dispersion aqueuse de résine polymère d'un monomère à insaturation éthylénique renfermant du silicium hydrolysable dans sa molécule sont utilisés en un rapport pondéral des matières solides compris dans l'intervalle de 0,5-99,5/99,5-0,5.
